## Europäisches Patentamt
## European Patent Office
## Office européen des brevets

(19)

(11) Veröffentlichungsnummer: **0 154 707**
**B1**

(12) # EUROPÄISCHE PATENTSCHRIFT

(45) Veröffentlichungstag der Patentschrift:
05.11.86

(51) Int. Cl.⁴: **G 11 B 5/71**

(21) Anmeldenummer: **84115409.9**

(22) Anmeldetag: **14.12.84**

(54) **Magnetische Aufzeichnungsträger.**

(30) Priorität: **30.12.83 DE 3347531**

(43) Veröffentlichungstag der Anmeldung:
**18.09.85 Patentblatt 85/38**

(45) Bekanntmachung des Hinweises auf die Patenterteilung:
**05.11.86 Patentblatt 86/45**

(84) Benannte Vertragsstaaten:
**DE FR GB NL**

(56) Entgegenhaltungen:
**DE-A-3 008 021**
**DE-B-1 232 206**
**GB-A-2 039 281**

(73) Patentinhaber: **BASF Aktiengesellschaft, Carl-Bosch- Strasse 38, D-6700 Ludwigshafen (DE)**

(72) Erfinder: **Lehner, August, Dipl.- Ing., Wachenheimer Strasse 4, D-6701 Roedersheim-Gronau (DE)**
Erfinder: **Kohl, Albert, Graf- Schoenborn- Strasse 14, D-6716 Dirmstein (DE)**
Erfinder: **Roller, Hermann, Schwedlerstrasse 118, D-6700 Ludwigshagen (DE)**
Erfinder: **Balz, Werner, Dr., Kropsburgstrasse 44, D-6703 Limburgerhof (DE)**
Erfinder: **Koester, Eberhard, Dr., Max- Slevogt-Strasse 23, D-6710 Frankenthal (DE)**
Erfinder: **Sommermann, Friedrich, Dr., Grimmelshausenstrasse 9, D-7640 Kehl (DE)**

**Beschreibung**

Die Erfindung betrifft magnetische Aufzeichnungsträger, bestehend aus einem nichtmagnetischen Trägermaterial und mindestens einer darauf haftfest aufgebrachten Magnetschicht auf der Basis von in einem Polymerbindemittel, einem Gleitmittel und weiteren üblichen Zusatzstoffen feinverteilten magnetischen Material.

Magnetische Aufzeichnungsträger, welche für den Einsatz in Audio- und insbesondere Videorecordern vorgesehen sind, müssen in vielfältiger Weise hohen Ansprüchen genügen. Neben den besonderen Anforderungen an die elektromagnetischen Aufzeichnungs- und Wiedergabeeigenschaften, die den unterschiedlichen Bedingungen bei Audio-, Videobändern und auch flexiblen Datenträgern genügen müssen, wird vor allem bezüglich der mechanischen Eigenschaften der Aufzeichnungsträger eine ständige Anpassung und Verbesserung gefordert. Die Magnetschichten müssen sehr flexibel sein, eine hohe Elastizität aufweisen und eine hohe Reißfestigkeit besitzen. Außerdem wird zur Vermeidung von Pegeleinbrüchen zunehmend eine Verringerung der Reibungswerte, eine Erhöhung der Abrieb- und Verschleißfestigkeit, sowie eine Verbesserung der Tropenfestigkeit gefordert. Da außerdem die magnetischen Aufzeichnungsträger zur Verbesserung der Elektroakustik zwangsweise immer glatter werden, können bei weichen thermoplastischen Magnetschichten schon bei 20 bis 30°C, besonders aber bei höheren Temperaturen und hoher Luftfeuchtigkeit, die Zusatzstoffe aus der Magnetschicht so stark austreten, daß sich im Falle der Verwendung von festen Gleitmitteln ein sichtbarer Belag auf der Magnetschicht bildet. Besonders kritisch ist hierbei der Glättungsvorgang im Zuge der Magnetschichtherstellung, da die Verdichtung der Magnetschicht bei hoher Temperatur und hohem Druck erfolgt. Die Bänder schmieren, an Aufnahme- und Wiedergabeköpfen bilden sich Ablagerungen oder die Bänder blocken bei hoher Luftfeuchtigkeit, besonders bei hoher Temperatur.

Um diese Fehler zu vermeiden, ist es erforderlich, außer der Verwendung besonders geeigneter magnetischer Materialien, wie Chromdioxid, cobaltdotierten Eisenoxiden und ferromagnetischen Metallteilchen, die in der Magnetschicht insgesamt enthaltenen Materialien so auszuwählen, daß die Magnetschichten neben der besonders hohen remanenten Magnetisierung in der Aufzeichnungsrichtung und bei den geforderten glatten Oberflächen die erforderlichen mechanischen Eigenschaften aufweisen. Solche Magnetschichten müssen einen hohen Anteil an magnetisierbarem Material in der Magnetschicht enthalten und diese magnetisierbaren nadelförmigen Teilchen müssen sich in der Magnetschicht sehr stark entlang der vorgesehenen Aufreichnungsrichtung orientieren lassen. Gerade die Verbesserung der genannten Eigenschaften, wie Oberflächenrauhigkeit, Remanenz und Ausrichtungsgrad bei gleichzeitig hervorragenden mechanischen Eigenschaften sind bei ein und demselben magnetischen Material im hohen Maße von den zur Herstellung der Magnetschicht verwendeten Bindemittel und Zusatzstoffen abhängig. Von den Zusatzstoffen sind in erster Linie die sogenannten Gleitmittel, Hydrophobierungsmittel und Dispergiermittel zu nennen, welche durch ihren Einsatz die elektroakustischen, magnetischen und mechanischen Eigenschaften der Bänder beeinflussen.

Die Verminderung der Oberflächenrauhigkeit der Magnetschicht ist bei hochwertigen magnetischen Aufzeichnungsträgern besonders wichtig, da für die Auflösung kleinster Wellenlängen ein besonders enger Band/Kopf-Kontakt erforderlich ist. Daraus ergeben sich dann die Anforderungen, die an die Gleiteigenschaften bzw. Verschleißfestigkeit der Bänder gestellt werden, denn eine Beschädigung der Schicht würde sofort zu Pegeleinbrüchen führen.

Die Lösung dieser Probleme wurde bereits durch den Zusatz von Hydrophobierungsmitteln, nachträgliches Aufbringen von Gleitmitteln, Erhöhung der Oberflächenhärte durch Vernetzung, Lackkombination aus 2 bis 4 Lackkomponenten, welche evtl. zusätzlich vernetzt werden können, versucht. Die Vielzahl der bisher vorgeschlagenen Maßnahmen weisen oft erhebliche verfahrenstechnische oder produktionsspezifische Mängel auf, bzw. sie erfüllen die Anforderungen nicht oder nur ungenügend. Inzwischen werden auch die Laufeigenschaften der magnetischen Aufzeichnungsträger unter verschiedenen Klimabedingungen, besonders jedoch bei hoher Luftfeuchtigkeit und hoher Temperatur als Qualitätsmerkmal bewertet.

Zur Verbesserung der mechanischen Eigenschaften, der Oberflächenglätte und der Laufeigenschaften auch unter extremen Bedingungen werden in an sich bekannter Weise in kleinen Mengen Gleitmittel, aber auch Füllstoffe verwendet, die bei der Dispergierung der magnetischen Materialien oder bei der Herstellung der Magnetschicht zugemischt. Beispiele solcher Zusätze sind Fettsäuren oder isomerisierte Fettsäuren, wie Stearinsäure oder deren Salze mit Metallen der ersten bis vierten Hauptgruppe des Periodensystems der Elemente, amphotere Elektrolyte, wie Lecithin, sowie Fettsäureester, Fettsäureamide oder Wachse, Siliconöle, Ruß usw. Diese Produkte bringen, besonders dann wenn sie miteinander kombiniert werden, sehr gute Laufeigenschaften bei üblichen Klimabedingungen. Unter extremen Klimabedingungen sind, selbst bei Verwendung spezieller Bindemittelsysteme, wie sie z.B. für hochaussteuerbare Audio- oder Videobänder eingesetzt werden, solche Bänder nur bedingt geeignet.

So konnten durch Kombination von Zinkfettsäuresalzen mit Fettsäureamiden sehr gute Reibwerte erzielt werden, jedoch nur durch die Kombination von Zinkfettsäuresalzen mit Stearylamid, wurden gleichzeitig sehr gute Bandeigenschaften bei hoher Temperatur und hoher Luftfeuchtigkeit erzielt. Bei diesen extremen Anwendungsbedingungen, aber auch schon beim Glätten der Bänder bei hoher Temperatur und hohem Druck, gibt es einen weißen Belag, der vorwiegend aus Stearylamid und teilweise aus dem Zinksalz besteht. Entsprechende magnetische Aufzeichnungsträger sind daher nicht voll tauglich.

Es bestand daher die Aufgabe, durch eine einfache und sichere Maßgabe magnetische Aufzeichnungsträger bereitzustellen, bei denen durch die Verwendung von Zusätzen, die nicht ausschwitzen, die Verschleißfestigkeit und die Tropenfestigkeit verbessert und gleichzeitig die Reibwerte verringert werden, ohne daß es sich auf die magnetischen und elektroakustischen Eigenschaften nachteilig auswirkt. Durch diese Verbesserung sollen ebenfalls Fegeleinbrüche vermieden und das Blocken der Bänder bei extremen Bedingungen verhindert werden.

Es wurde nun gefunden, daß magnetische Aufzeichnungsträger, bestehend aus einem nichtmagnetischen Trägermaterial und mindestens einer darauf haftfest aufgebrachten Magnetschicht auf der Basis von in einem Polymerbindemittel, einem Gleitmittel und weiteren üblichen Zusatzstoffen feinverteilten magnetischen Material der gestellten Aufgabe entsprechen, wenn die Magnetschicht als Gleitmittel eine Mischung aus hydrophiliertem Zinkstearat und Stearylamid enthält.

Besonders vorteilhaft·ist es, wenn das Verhältnis von hydrophiliertem Zinkstearat zu Stearylamid in der Gleitmittelmischung größer 1: 1, vorzugsweise 1,8: 1 bis 10: 1 und in besonders vorteilhafter Weise 2,5: 1 bis 6: 1 ist. Die Gesamtmenge an Gleitmittelmischung beträgt zweckmäßigerweise weniger als 7, bevorzugt weniger als 4 Gew.-%, bezogen auf das magnetische Material.

Bei speziellen Anwendungen der magnetischen Aufzeichnungsträger hat es sich zu deren gezielten Optimierung als zweckmäßig erwiesen, neben der Gleitmittelmischung aus hydrophiliertem Zinkstearat und Stearylamid noch andere Gleit- oder Verlaufmittel zuzusetzen.

Das hydrophilierte Zinkstearat der Gleitmittelmischung, welche die erfindungsgemäßen magnetischen Aufzeichnungsträger aufweisen, enthält 5 bis 40, vorzugsweise 10 bis 30 Gew.-% einer hydrophilen Komponente. Das Hydrophilierungsmittel besteht aus einer Alkylkette und einer hydrophilen Gruppe. Hierfür geeignet sind Alkylbenzolsulfonate mit einem Alkylrest von 10 bis 22, bevorzugt 16 bis 20 C-Atomen. Besonders gut geeignet ist dabei Stearylbenzolsulfonat. Aber auch hydrophile Polyäther, welche mit Fettalkoholen von 12 bis 25 C-Atomen verestert sind oder Alkylbetaine mit einem Alkylrest von 14 bis 20 C-Atomen oder Mono-, Di- oder Triester der Phosphorsäure und Monoalkoholen mit 12 bis 25 C-Atomen lassen sich vorteilhaft einsetzen. Bevorzugt sind Produkte, welche einen Alkylrest mit 18 C-Atomen aufweisen. Bei der Ausarbeitung der Erfindung hat es sich als günstig erwiesen, wenn das hydrophilierte Zinkstearat bis zu 10 Gew.% eines Elektolyten, z.B. $Na_2SO_4$ oder NaCl enthält.

Der Aufbau der erfindungsgemäßen magnetischen Aufzeichnungsträger erfolgt ansonsten in an sich bekannter Weise. Als Bindemittel für die Dispersion des magnetischen Materials werden die hierfür üblichen bekannten organischen Polymeren eingesetzt. Sie sind u.a. in der DE-B 21 75 685, den DE-C- 24 42 762 und 27 53 694 beschrieben. In gleicher Weise lassen sich elektronenstrahlhärtbare Polyurethanbindemittel einsetzen. Bevorzugt geeignet sind niedermolekulare Polyurethanbindemittel, die erst durch eine Vernetzungsreaktion ihre Endeigenschaften erreichen (DE-A- 32 27 161, 32 27 163 und 32 27 164). Solche Bindemittel sind dispergierfreundlich, nach der Beschichtung gut zu glätten und ergeben Magnetschichten mit guten mechanischen, elektroakustischen und magnetischen Werten. Für den Fall, daß sie nicht im Rahmen der erfindungsgemäßen Aufzeichnungsträger eingesetzt sind, neigen sie jedoch dazu, daß die Aufzeichnungsträger blocken.

Als Lösungsmittel werden vorzugsweise cyclische Ether, wie Tetrahydrofuran und Dioxan, und cyclische Ketone, wie Cyclohexanon, verwendet. Selbstverständlich können je nach Anwendungsgebiet die Polyurethane auch im anderen stark polaren Lösungsmitteln, wie Dimethylformamid, N-Methylpyrrolidon, Dimethylsulfoxid oder Ethylglykolacetat gelöst werden. Ebenso ist es möglich, die genannten Lösungsmittel mit Aromaten, wie Toluol oder Zylol und Estern, wie Ethyl- oder Butylacetat, zu mischen.

Als magnetische Materialien werden feinteiliges, stäbchenförmiges Gamma-Eisen(III)oxid mit einer durchschnittlichen Teilchengröße von 0,1 bis 2 µm, insbesondere von 0,1 bis 0,9 µm und bevorzugt stäbchenförmiges Chromdioxid der gleichen Teilchenstruktur, wie beim Eisenoxid angegeben, verwendet. Weitere geeignete Materialien sind Gamma-Eisen(III)oxid mit Dotierungen von Schwermetallen, insbesondere von Kobalt sowie feinteilige Metallegierungen von Eisen, Kobalt und/oder Nickel. Im Rahmen der Erfindung hat es sich als zweckmäßig erwiesen, wenn das magnetische Material 0,3 bis 2 Gew.% Wasser enthält.

Den Dispersionen können weitere Zusatzstoffe zur Verbesserung der Magnetschicht zugesetzt werden. Beispiele solcher Zusätze sind Fettsäuren Polycarbonsäuren, Mono-, Di- oder Polysulfonsäuren bzw. Phosphorsäuren ·deren Gemische, Ester, sowie Wachse, Lecithine, Siliconöle, Fluorcarbone, außerdem Füllstoffe wie Ruß, Graphit, Quarzmehl und/oder nichtmagnetisierbaresPulver auf Silicatbasis. Im allgemeinen liegen solche Zusätze insgesamt unter 5 Gew.-%, bezogen auf die Magnetschicht.

Eine gegebenenfalls, je nach Bindemittelsystem und Bandeigenschaftsprofil, erforderliche Vernetzung der magnetischen Aufzeichnungsträger ist die Umsetzung der Polyurethane oder Polyurethanbindemittelgemische mit Polyisocyanaten. Für die Vernetzung kann eine Vielzahl organischer Di-, Tri- oder Polyisocyanate oder Isocyanatprepolymere bis zu einem Molgewicht von 10 000, vorzugsweise zwischen 500 und 3 000, verwendet werden. Bevorzugt sind Polyisocyanate, die mehr als 2 NCO-Gruppen pro Molekül tragen. Als besonders geeignet haben sich Polyisocyanate auf Basis von Toluylendiisocyanat, Hexamethylendiisocyanat oder Isophorondiisocyanat, die durch Polyaddition an Di- und Triole oder durch Biuret- und Isocyanatbildung entstehen, erwiesen. Besonders günstig ist ein Additionsprodukt von Toluylendiisocyanat an Trimethylpropan und Diethylenglykol. Die Polyisocyanatmenge kann dabei je nach Bindemittelsystem sehr unterschiedlich sein.

Die Herstellung der erfindungsgemäßen magnetischen Aufzeichnungsträger geschieht in üblicher Weise. Hierzu wird das magnetische Material mit dem verwendeten Bindemittel, gegebenenfalls weiteren Zusatzstoffen und ausreichend Lösungsmittel in einer Dispergiermaschine, z.B. einer Tropfkugelmühle oder einer Rührwerkskugelmühle, dispergiert. Zur Einstellung des zweckmäßigen Bindemittel-Pigment-Verhältnisses können diese der Mischung entweder in festem Zustand oder in Form von 10 bis 60 %igen Lösungen zugegeben werden. Es hat sich als zweckmäßig erwiesen, die Dispergierung solange fortzuführen, bis eine extreme feine Verteilung des magnetischen Materials erreicht ist, was 1 bis 7 Tage erfordern kann. Durch anschließendes wiederholtes Filtrieren erhält man eine völlig homogene Magnetdispersion. Gegebenenfalls erforderliche Vernetzungsmittel werden vor der geschichtung zur Dispersion gegeben.

Die Magnetdispersion wird nun mit Hilfe üblicher Beschichtungsmaschinen, z.B. mittels eines Linealgießers, auf den nichtmagnetisierbaren Träger aufgetragen. Als nichtmagnetische und nichtmagnetisierbare Träger lassen sich die üblichen Trägermaterialien verwenden, insbesondere Folien aus linearen Polyestern, wie Polyethylenterephthalat, im allgemeinen in Stärken von 4 bis 200 µm und insbesondere von 6 bis 36 µm. Bevor die noch flüssige Beschichtungsmischung auf dem Träger getrocknet wird, was zweckmäßigerweise bei Temperaturen von 50 bis 90°C geschieht, werden die anisotropen Magnetteilchen gegebenenfalls durch die Einwirkung eines Magnetfeldes entlang der vorgesehenen Aufzeichnungsrichtung orientiert. Anschließend können die Magnetschichten auf üblichen Maschinen durch Hindurchführen zwischen geheizten und polierten Walzen, gegebenenfalls bei Anwendung von Druck und Temperaturen von 40 bis 100°C, vorzugsweise 60 bis 80°C, geglättet und verdichtet werden. Die Dicke der Magnetschicht beträgt im allgemeinen 2 bis- 20 µm, vorzugsweise 3 bis 15 µm.

Die erfindungsgemäßen magnetischen Aufzeichnungsträger zeichnen sich gegenüber denen nach dem Stand der Technik durch eine verbesserte Verschleißfestigkeit und Tropenfestigkeit aus und es schwitzt weder Stearylamid noch Zinkstearat aus. Die Widerstandsfestigkeit der Oberfläche nimmt zu und die Reibungswerte nehmen ab. Pegeleinbrüche werden vermieden und das Blocken der Bänder wird verhindert.

Die Erfindung wird anhand der folgenden Beispiele näher erläutert und die Vorteile gegenüber dem Stand der Technik (Vergleichsversuche) aufgezeigt. Die in den Beispielen genannten Teile und Prozente sind, soweit nicht anders angegeben, Gewichtseinheiten.

Die resultierenden magnetischen Aufzeichnungsträger wurden folgenden Tests unterzogen:

### Test 1

Ablagerungstest

Auf einem Recorder werden jeweils 4 mit dem Magnetband gefüllte Kassetten bei 30°C und 93 % rel. Feuchte 20 Stunden lang auf Wiedergabe betrieben. Danach werden die Ablagerungen auf dem Löschkopf, dem Tonkopf und auf der Tonwelle visuell bewertet. Die Stärke der Ablagerungen werden in einer Notenskala (von Note 1: keine Ablagerung bis Note 6: sehr starke Ablagerungen) festgehalten und der Mittelwert gebildet.

### Test 2

IND-Test

10 mit dem Magnetband gefüllten Kassetten werden 4 Wochen bei 40°C und 93 % rel. Feuchte gelagert und anschließend bei 30°C und 93 % rel. Feuchte im Wiedergabebetrieb gefahren. Die Beurteilung der Ablagerungen erfolgt wie in Test 1.

### Test 3

Duplicator-Test Die Klimabedingung bei Lagerung und Betrieb von jeweils 10 Kassetten entsprechen denen des Tests 2. Danach wird jede Kassette bei 8facher Geschwindigkeit (38 cm/s) einem Durchlauf unterzogen. Zur Auswertung werden die registrierten Bandlaufstörungen und Blockierer herangezogen und der prozentuale Anteil der ausgefallenen Kassetten als Meßwert angegeben.

### Test 4

Pegelkonstanz

Es wird die Anzahl der Durchläufe bestimmt, bis ein Pegeleinbruch größer 2 dB auftritt.

4

**Test 5**

Ausschwitzen

Mit Magnetband gefüllte Kassetten werden 10 Tage bei 50°C im Trockenschrank gelagert. Danach wird die Oberfläche der Magnetschicht daraufhin geprüft, ob sich ein Belag gebildet hat und beim anschließenden Betrieb auf einem handelsüblichen Laufwerk, ob sich der Belag am Tonkopf ablagert.

**Beispiel 1**

In eine Stahlkugelmühle mit einem Inhalt von 600 Volumenteilen, gefüllt mit 600 Teilen Stahlkugeln mit einem Durchmesser zwischen 4 und 6 mm, wurden 102 Teile Tetrahydrofuran, 31 Teile einer 50 %igen Lösung der Polyharnstoffurethane gemäß Beispiel D der DE-A 32 27 164, 100 Teile eines ferromagnetischen Chromdioxids mit einer mittleren Nadellänge von 0,5 µm, 2,0 Teile hydrophiliertes Zinkstearat (Zinkstearat mit 6 % Stearylbenzolsulfonat und 4 % Natriumsulfat), 0,15 Teile eines handelsüblichen Siliconöls sowie 0,5 Teile Stearylamid eingefüllt und der Ansatz 36 Stunden dispergiert. Die Dispersion wurde dann unter Druck filtriert und unmittelbar vor dem Auftragen auf eine 15 µm dicke Polyethylenterephthalatfolie unter Rühren, bezogen auf einen Teil Dispersion, mit 0,028 Teilen einer 75 %igen Lösung eines Triisocyanats aus 3 Mol Toluylendiisocyanat und 1 Mol Trimethylolpropan versehen. Die beschichtete Folie wurde nach Durchlaufen eines Magnetfeldes zur Ausrichtung der Magnetteilchen bei Temperaturen zwischen 50 und 80°C getrocknet und durch Hindurchführen zwischen beheizten Walzen unter Druck (60°C, Liniendruck 200 kg/cm) geglättet.

Die Messung der magnetischen Eigenschaften wurde in einem Meßfeld von 160 kg/m durchgeführt: die remanente Magnetisierung betrug 175 mT und die Ausrichtung der magnetischen Teilchen, d.h. das Verhältnis der remanenten Magnetisierung längs zu quer, 3,0. Nach dem Schneiden von 3,81 mm breiten Bändern wurden diese geprüft. Die Ergebnisse sind in der Tabelle angegeben.

**Beispiel 2**

Es wurde wie in Beispiel 1 beschrieben verfahren, jedoch bestand die Gleitmittelmischung aus 1,5 Teilen hydrophiliertes Zinkstearat und 0,5 Teilen Stearylamid. Die Ergebnisse sind in der Tabelle angegeben.

**Beispiel 3**

Es wurde wie in Beispiel 1 beschrieben verfahren, jedoch wurde anstelle des Polymeren gemäß Beispiel D der DE-A 32 27 164 dasjenige gemäß Beispiel A eingesetzt. Die Ergebnisse sind in der Tabelle angegeben.

**Vergleichsversuch 1**

Es wurde wie in Beispiel 1 beschrieben verfahren, jedoch wurde anstelle des hydrophilierten Zinkstearats 1 Teil reines Zinkstearat und 1 Teil Stearylamid eingesetzt. Die Ergebnisse sind in der Tabelle angegeben.

**Vergleichsversuch 2**

Es wurde wie in Beispiel 1 beschrieben verfahren, jedoch wurde anstelle des hydrophilierten Zinkstearats Zinkoleat eingesetzt. Die Ergebnisse sind in der Tabelle angegeben.

**Vergleichsversuch 3**

Es wurde wie in Beispiel 1 beschrieben verfahren, jedoch wurde anstelle des Stearylamids Ölsäureamid eingesetzt. Die Ergebnisse sind in der Tabelle angegeben.

**Tabelle**

|              | Test 1 | Test 2                   | Test 3 | Test 4 | Test 5              |
| ------------ | ------ | ------------------------ | ------ | ------ | ------------------- |
| Beispiel 1   | 1,4    | 1,9                      | 0      | >100   | gut                 |
| Beispiel 2   | 1,6    | 1,8                      | 0      | >100   | gut                 |
| Beispiel 3   | 1,5    | 2,0                      | 0      | >100   |                     |
| Vergl.Vers. 1| 2,9    | 2,0                      | 0      | 80     | gut                 |
| Vergl.Vers. 2| 3,0    | Bänder blocken           | 100    | 40     | Kopf schmiert gut   |
| Vergl.Vers. 3| 2,0    | 7 von 10 Bänder blocken  | 80     | >100   | Kopf ver- schmiert  |

**Patentansprüche**

1. Magnetische Aufzeichnungsträger, bestehend aus einem nichtmagnetischen Trägermaterial und einer darauf haftfest aufgebrachten magnetisierbaren Schicht auf der Basis von in einem Polymerbindemittel und üblichen Zusatzstoffen feinverteilten magnetischen Material, dadurch gekennzeichnet, daß die magnetisierbare Schicht als Gleitmittel eine Mischung aus hydrophiliertem Zinkstearat und Stearylamid enthält.

2. Magnetische Aufzeichnungsträger gemäß Anspruch 1, dadurch gekennzeichnet, daß das Verhältnis von hydrophiliertem Zinkstearat zu Stearylamid größer 1: 1 ist und die Gesamtmenge der in der magnetisierbaren Schicht enthaltenen Gleitmittelmischung weniger als 7 Gew.-%, bezogen auf das magnetische Material beträgt.

**Claims**

1. A magnetic recording medium which consists of a nonmagnetic base and, applied thereto, a firmly adhering magnetizable layer based on magnetic material finely dispersed in a polymeric binder, and conventional additives, wherein the magnetizable layer contains, as lubricant, a mixture of zinc stearate which has been rendered hydrophilic, and stearylamide.

2. A magnetic recording medium as claimed in claim 1, wherein the ratio of zinc stearate which has been rendered hydrophilic to stearylamide is higher than 1:1, and the total amount of the lubricant mixture present in the magnetizable layer is less than 7% by weight, based on the magnetic material.

**Revendications**

1.- Support d'enregistrement magnétique constitué d'un matériau-support non magnétique et d'une couche magnétisable fixée dessus de façon adhérente et à base d'un matériau magnétique finement réparti dans un liant polymère et d'additifs usuels, caractérisé par le fait que la couche magnétisable contient, comme lubrifiant, un mélange de stéarate de zinc hydrophilisé et de stéarylamide.

2.- Support d'enregistremant magnétique, selon la revendication 1, caractérisé par le fait que la rapport du stéarate de zinc hydrophilisé au stéarylamide est supérieur à 1/1 et la quantité totale de mélange lubrifiant contenu dans la couche magnétisable est inférieure à 7 % en poids, rapportée au matériau magnétique.